# EUROPÄISCHE PATENTSCHRIFT

(11) **EP 0 416 051 B1**
(45) Veröffentlichungstag und Bekanntmachung des Hinweises auf die Patenterteilung: **22.06.1994**
(21) Anmeldenummer: 90901797.2
(22) Anmeldetag: 24.01.1990
(51) Int. Cl.: B60T 8/32, B60T 11/28, F16L 55/05

(54) **BLOCKIERGESCHÜTZTE, HYDRAULISCHE BREMSANLAGE**
ANTILOCK HYDRAULIC BRAKING SYSTEM
SYSTEME HYDRAULIQUE DE FREINAGE ANTIBLOCAGE

(30) Priorität: 21.03.1989 DE 3909209; 20.04.1989 DE 3912935
(43) Veröffentlichungstag der Anmeldung: 13.03.1991
(73) Patentinhaber: ITT Automotive Europe GmbH, 60488 Frankfurt (DE)
(72) Erfinder: BURGDORF, Jochen, D-6050 Offenbach-Rumpenheim (DE); DAVID, Anton, D-6071 Götzenhain (DE); GUSE, Hans-Albrecht, D-6380 Bad Homburg (DE); ZUTT, Ulrich, D-6272 Niedernhausen 4 (DE); SCHWEIGHÖFER, Bernd, D-6384 Schmitten (DE); OBERSTEINER, Georg, D-6240 Königstein (DE)
(86) Internationale Anmeldenummer: EP9000131
(87) Internationale Veröffentlichungsnummer: WO9011212

(56) Entgegenhaltungen:
- EP-A- 0 264 855
- EP-A- 0 282 031
- DE-A- 2 128 168
- DE-A- 3 137 287
- DE-A- 3 808 901
- GB-A- 2 165 003
- GB-A- 2 193 770
- GB-A- 2 194 010
- GB-A- 2 196 401
- US-A- 2 755 820
- US-A- 2 808 070
- US-A- 2 899 975

## Beschreibung

Die Erfindung bezieht sich auf eine blockiergeschützte, hydraulische Bremsanlage, wie sie im Oberbegriff des Anspruchs 1 charakterisiert ist.

Eine derartige Anlage ist z.B. in der DE OS 21 28 168 beschrieben.

Beim Betätigen der Bremse wird Druckmittel aus dem Hauptbremszylinder in die Radbremse gedrückt, so daß sich die Bremsbeläge an die Bremsbacken, bzw. Bremsscheibe anlegen, und so eine Bremswirkung erzeugt wird. Steigt die Bremskraft über ein bestimmtes Maß hinaus an, so besteht die Gefahr, daß das Rad blockiert. Sobald dieser Zustand auftritt, wird die Bremsleitung gesperrt und Druckmittel aus der Radbremse abgelassen. Dieses Druckmittel wird mittels einer Pumpe in den Hauptbremszylinder zurückgefördert. Sobald das Rad ausreichend wiederbeschleunigen konnte, wird die Bremsleitung wieder geöffnet und der Radbremse zum Druckaufbau erneut Druck zugeführt.

Um die beschriebenen Schaltzustände erzielen zu können, sind Modulationsventile in der Bremsleitung und der Entlastungsleitung vorgesehen. Beim Sperren und Öffnen der Brems- bzw. Entlastungsleitung kann es nicht vermieden werden, daß Druckwellen im Hydrauliksystem entstehen. Diese Druckwellen erzeugen Körperschallschwingungen, die eine erhebliche Intensität erreichen können und vom Fahrer des Fahrzeuges als unangenehm empfunden werden. Des weiteren besteht die Gefahr, daß die Geräusche dahingehend interpretiert werden, daß ein Fehler in der Bremsanlage vorliegt, wodurch der Fahrer möglicherweise zu einer nicht vorhersehbaren Handlung veranlaßt wird. In der genannten Offenlegungsschrift wird daher vorgeschlagen, in die Druckleitung zwischen der Pumpe und dem Hauptbremszylinder bzw. der Einmündung der Druckleitung in die Bremsleitung eine Dämpfungseinrichtung und eine Blende einzufügen. Mit diesen Hilfsmitteln werden die erwähnten Druckwellen geglättet und damit letztlich eine Geräuschminderung herbeigeführt.

Da die Dämpfungseinrichtung und die Blende an die Bremsleitungen anschließen, werden sie auch während einer nicht geregelten Bremsung wirksam. Bei einer derartigen Bremsung wird das Druckmittel, das aus dem Hauptbremszylinder zu den Radbremsen gedrückt wird, vom Radbremszylinder aufgenommen und von einem in Richtung der Dämpfungseinrichtung sperrenden Rückschlagventil am Übertritt in dessen volumenerweiterten Raum gehindert, so daß eine Pedalwegverlängerung vermieden wird. Die Dämpfungseinrichtung besteht aus einer voluminösen federbelasteten Kolben-Zylinder-Einheit, die sich infolge ihrer reibungsbehafteten und damit reaktionsträgen Aktivierung und mangels unzureichender Miniaturisierung als nachteilig erweist.

Aus dem Dokument GB-A-2 194 010 ist bereits ein Rückschlagventil bekannt, das aus einer an einem Druckspeicherkolben angeordneten Überströmmanschette gebildet ist, wobei die Dichtlippe der Überströmmanschette an eine Begrenzungswand einer Druckausgleichskammer anliegt, solange das Druckniveau in der Druckausgleichskammer größer ist als der hinter der Überströmmanschette wirksame Druck eines Nachlaufbehälters. Die Druckausgleichskammer ist Bestandteil einer schlupfgeregelten Bremsanlage. Die Druckausgleichskammer steht sowohl mit der Saugseite einer Pumpe wie auch mit den an den Radbremsen angeordneten Auslaßventilen in Verbindung. Im Falle der Bremsschlupfregelung gelangt somit überschüssiges Druckmittelvolumen der Radbremsen über die jeweils geöffneten Auslaßventile in die Druckausgleichskammer, wodurch der Pumpe ein Speichervolumen zur Verfügung steht, das mit steigendem Verbrauch über das beispielhaft als Überströmmanschette ausgebildete Rückschlagventil, durch das in einem Nachlaufbehälter bevorratete Druckmittelvolumen ergänzt wird. Nachteilig hierbei ist die Tatsache, daß infolge der Funktionsunterschiede zum Rückschlagventil und Druckventil, keine Dämpfung der zwischen der Pumpe und dem Hauptbremszylinder bzw. zwischen der Einmündung der Druckleitung in die Bremsleitung entstehenden akustisch vernehmbaren Druckwellen möglich ist.

Ferner ist aus der GB-A-2 193 770 eine blockiergeschützte, hydraulische Bremsanlage hervorgegangen, die in der Druckleitung der Pumpe in Reiheschaltung ein Rückschlagventil und einen Druckmittelspeicher aufweist, um die von der Pumpe übertragenen Druckpulsationen zu reduzieren. In einem Abzweig zur Druckleitung befindet sich eine Drosselstelle, welcher einen Druckschalter sowie ein in Richtung des Nachlaufbehälters öffnendes Rückschlagventil nachgeordnet sind. Die weiträumig im Pumpenblock verstreut angeordneten Ventilelemente stehen in keinem direkten Funktionszusammenhang, so daß die Geräuschdämpfung auf die Druckversorgung des Bremsdruckgebers begrenzt ist.

Die Aufgabe der Erfindung ist es, die zwischen der Pumpe und den Bremsleitungen in die Druckleitung geschaltete Dämpfungseinrichtung der gattungsgemäßen Bremsanlage so zu konzipieren, daß diese sich durch eine kostengünstige, raumsparende und mit geringem Montageaufwand verbundene Bauweise auszeichnet. Diese Aufgabe wird durch die kennzeichnenden Merkmale der Patentansprüche 1 und 12 gelöst.

Die erfinderische Idee kann in blockiergeschützten hydraulischen Bremsanlagen der unterschiedlichsten Typen eingesetzt werden. So kann sie genutzt werden z.B. bei Bremsanlagen des Types, der in der genannten Patentschrift beschrieben ist, bei denen die Saugseite der Pumpe ausschließlich an die Entlastungsleitung angeschlossen ist. Sie ist aber auch dann einsetzbar, wenn die Pumpe wie in dem weiter unten beschriebenen Ausführungsbeispiel an einen Vorratsbehälter anschließt, der bei nicht betätigter Bremse mit den Arbeitskammern des Hauptbremszylinders verbunden ist.

Diese Lösung ermöglicht eine weitgehende Vormontage des Bremssystems, so daß beim Einbau ins Fahrzeug nur noch ein geringer Einbauaufwand entsteht. Auch die Möglichkeiten einer Funktionsüberprüfung des Energieversorgungssystems inclusive der Dämpfungseinrichtung oder der gesamten Bremsanlage wird durch diese Lösung verbessert. In den Unteransprüchen werden Maßnahmen beschrieben, welche eine besonders kompakte integrierte Ausbildung der Energieversorgung ermöglichen.

Eine besonders effektive Minimierung von Druckpulsationen und damit von Geräuschen wird dadurch erreicht, daß die Dämpfungskammer zumindest teilweise von einem elastomeren Formteil begrenzt ist, dessen der Dämpfungskammer abgewandte Seite mindestens einen Hohlraum begrenzt. Durch diese Maßnahme ist es mit einfachen und raumsparenden Mitteln möglich, selbst bei unterschiedlichem Druckniveau Druckpulsationen zu dämpfen. Druckspitzen werden dadurch abgebaut, daß das elastomere Formteil durch Ausweichen in den Hohlraum Formänderungsenergie aufnimmt. Die Dämpfungscharakteristik kann dadurch beeinflußt werden, daß ein Federelement vorgesehen ist, durch welches das elastomere Formteil beaufschlagbar ist. Durch diese Maßnahme werden auch Temperatureinflüsse reduziert.

Es zeigen:
- Figur 1: eine schematische Darstellung der Bremsanlage zum Stand der Technik,
- Figur 2: ein erstes Ausführungsbeispiel der Dämpfungseinrichtung und
- Figur 3: eine weitere Ausgestaltungsform.

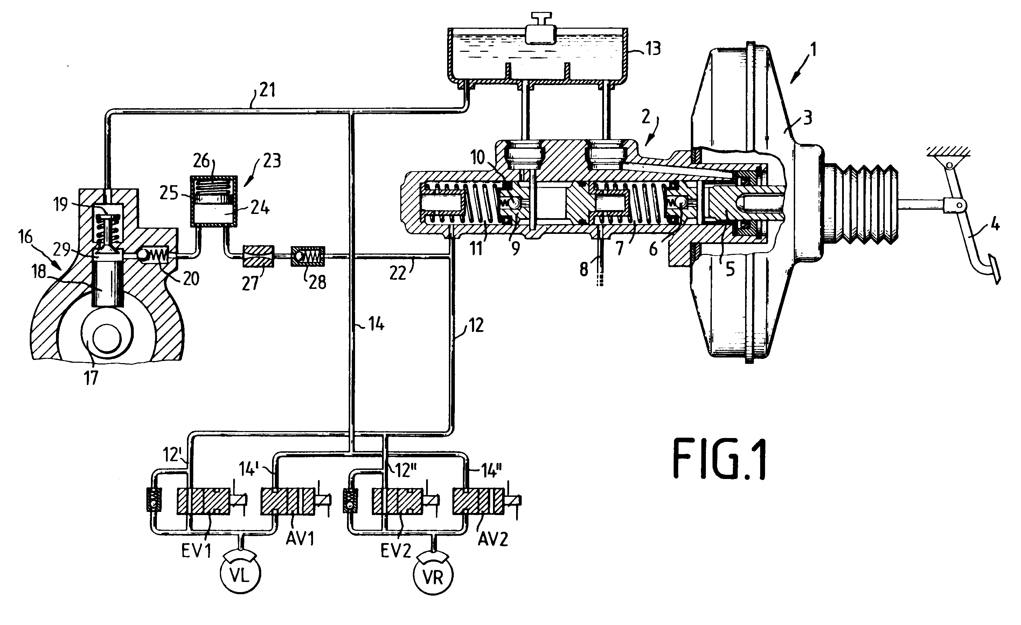

In der Figur 1 ist schematisch eine Bremsanlage zum Stand der Technik dargestellt, die aus einem Bremsdruckgeber 1 besteht, der sich wiederum aus einem Hauptbremszylinder 2 und einem Unterdruckverstärker 3 zusammensetzt. zum Betätigen der Anlage wird das Pedal 4 mit einer Kraft beaufschlagt. Diese Kraft wird unterstützt durch die Hilfskraft des Unterdruckverstärkers 3 auf den Druckstangenkolben 5 des Hauptbremszylinders 2 übertragen. Unter Einwirkung der Kraft wird der Druckstangenkolben 5 verschoben, wodurch das Zentralventil 6 schließt. In der Arbeitskammer 7 wird ein Druck aufgebaut, der auf den Schwimmkolben 9 übertragen wird. Unter Einwirkung dieses Drucks verschiebt sich der Schwimmkolben 9, wodurch das Zentralventil 10 schließt und in der Arbeitskammer 11 ebenfalls ein Druck aufgebaut wird. An die Arbeitskammern 7 und 11 sind Bremsleitungen 8 und 12 angeschlossen. Die Bremsleitung 12 ist gem. diesem Ausführungsbeispiel an die Vorderräder des Fahrzeuges angekoppelt. Dazu teilt sich die Bremsleitung 12 in zwei Zweigleitungen 12',12'' auf, an die jeweils ein Einzelrad der Vorderachse angeschlossen ist. In die Zweigleitungen 12', 12'' sind je ein stromlos offenes Sperrventil EV1 bzw. EV2 eingesetzt. Die Radbremsen stehen weiterhin über eine Entlastungsleitung 14, in dessen Zweigleitungen 14',14'' je ein stromlos geschlossenes Anslaßventil AV1 bzw. AV2 eingesetzt ist, mit dem Vorratsbehälter 13 in Verbindung.

Der Vorratsbehälter 13 steht über die Saugleitung 21 mit der Saugseite der Pumpe 16 in Verbindung. Die Druckseite der Pumpe führt über eine Druckleitung 22 in die Bremsleitung 12.

Nicht dargestellt ist der Bremskreis der Bremsleitung 8. An die Bremsleitung 8 sind in gleicher Weise wie die Vorderradräder an die Bremsleitung 12 die Hinterradräder angeschlossen.

Die Pumpe 16 weist einen Exzenter 17 auf, der einen Pumpenkolben 18 antreibt. Dieser begrenzt einen Pumpenraum 29, der über ein Saugventil 19 an die Saugleitung 21 und über ein Druckventil 20 an die Druckleitung 22 angeschlossen ist. Beim Saugventil 19 und dem Druckventil 20 handelt es sich jeweils um Rückschlagventile. Im Anschluß an das Druckventil 20 ist in der Druckleitung 22 eine Dämpfungskammer 24 dargestellt. Die Dämpfungskammer 24 wird von einem Kolben 25 begrenzt, der von einer Feder 26 beaufschlagt wird. Die Feder 26 stützt sich derart am Kolben 25 ab, daß dieser in die Dämpfungskammer 24 gedrückt wird, und so ihr kleinstes Volumen einnimmt. Der Dämpfungseinrichtung 23 ist eine Blende 27 nachgeschaltet. Im Anschluß an die Blende 27 ist ein Rückschlagventil 28 in die Druckleitung 22 eingefügt, das zur Pumpe hin sperrt.

Die Figur 1 zeigt die Bremse in einer nichtbetätigten Stellung. Die Arbeitsräume 7 und 11 stehen über die offenen Zentralventile 10 und 6 mit dem Vorratsbehälter 13 in Verbindung. Durch Betätigen des Pedals 4 wird in der schon beschriebenen Weise in den Arbeitsräumen ein Druck aufgebaut, der über die Bremsleitung 12 an die Räder der Vorderachse weitergeleitet wird. Der Druck in den Bremsleitungen und damit in den Radbremsen wird bestimmt von der Pedalkraft.

Während einer Bremsung wird das Raddrehverhalten der Bremsen mittels Sensoren dauernd überwacht, so daß sofort festgestellt werden kann, wann eines der Räder zu blockieren droht. In diesem Fall werden entsprechende Schaltsignale an die Ventile EV1,AV1,EV2,AV2 gegeben. Der erste Regelschritt besteht darin, daß das Einlaßventil EV1 bzw. EV2 des blockiergefährdeten Rades geschlossen wird, so daß kein weiterer Druckaufbau in der angeschlossenen Radbremse möglich ist. Zur Druckabsenkung wird das Auslaßventil AV1 bzw. AV2 geöffnet, wodurch Druckmittel aus der Radbremse abgelassen und in den Vorratsbehäler 13 geleitet wird. Gleichzeitig wird der Pumpenantrieb eingeschaltet. Die Pumpe nimmt das Druckmittel aus dem Druckmittelvorratsbehälter 13 und fördert es in die Bremsleitung 12.

Sobald das blockiergefährdete Rad wieder genügend beschleunigen konnte, wird das Auslaßventil geschlossen und das Einlaßventil geöffnet, so daß erneut Druckmittel in die Radbremsen gelangen kann und ein Bremsdruck aufgebaut wird. Die Regelung besteht darin, daß durch wiederholten Druckauf- bzw. Druckabbau die Räder in einen bestimmten Schlupfbereich eingestellt werden, wodurch maximale Bremskräfte bei gleichzeitiger Lenkbarkeit des Fahrzeugs übertragen werden. In die Druckleitungen 22 ist nun die Dämpfungseinrichtung eingesetzt, die insbesondere dann wirksam wird, wenn die Pumpe bei geschlossenen Einlaßventilen EV1, EV2 in die Bremsleitungen fördert. Da die Bremsleitung geschlossen ist, würden die Druckpulsationen der Pumpe in dem Bremsleitungsstück zwischen dem Einlaßventil und dem Hauptbremszylinder wirksam und es würden die entsprechenden Körperschallwellen ausgelöst. Dies wird durch Dämpfungseinrichtungen in Zusammenarbeit mit der Blende unterbunden. Das Druckmittel, das aus der Pumpe strömt, staut sich an der Blende 27 an und gelangt in die Dämpfungskammer 24 der Dämpfungseinrichtung 23. Dort verschiebt es den Kolben 25 gegen die Kraft der Feder 26, wodurch in bekannter Weise eine Glättung der Druckwellen erfolgt. Das Ergebnis ist, daß die Geräuschentwicklung drastisch reduziert werden kann. Das Rückschlagventil 28 übernimmt nun die wichtige Aufgabe, das bei einer nicht geregelten Bremsung Druckmittel aus dem Hauptbremszylinder nicht zur Dämpfungskammer 24 gelangen kann. Durch den sich in der Bremsleitung 12 aufbauenden Druck wird das Rück-schlagventil 18 nämlich geschlossen, so daß die Dämpfungs-kammer 24 nicht wirksam werden kann.

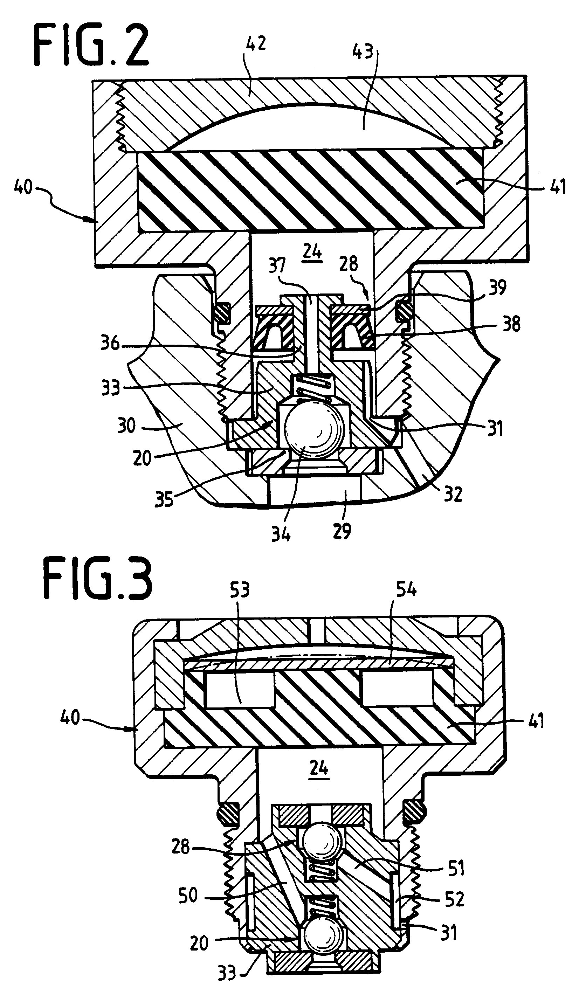

Fig. 2 zeigt einen Teil der Radialkolbenpumpe, die einen Zylinderblock 30 aufweist, in welchem durch einen nicht dargestellten Arbeitskolben Druckmittel von einem Pumpenraum 29 über das Druckventil 20 in einen Dämpfungsraum 24 gefördert wird, von welchem aus es über das Rückschlagventil 28 und die Drosselstelle 31 zum Druckanschluß 32 strömt, der mit einer nicht dargestellten Druckleitung verbunden ist. Diese ist wiederum an die Bremsleitung zwischen dem nicht dargestellten Hauptzylinder und dem ebenfalls nicht dargestellte Radbremsen angeschlossen.

Das Druckventil 20 setzt sich aus einem Ventilgehäuse 33 und einem federbelasteten Ventilschließglied zusammen, welches an den Ventilsitz 35 anlegbar ist. Der Ventilsitz 35 dichtet auch zwischen dem Ventilgehäuse 33 und dem Pumpenraum 29. Im Ventilgehäuse 33 ist ein Ventilträger 36 befestigt, der einen axial verlaufenden Kanal 37 aufweist, welcher das Druckventil 20 hydraulisch mit der Dämpfungskammer 24 verbindet. Der Ventilträger 36 ist radial von der Überströmmanschette 38 umgeben, die zusammen mit dem Ventilträger und der Begrenzungswand der Dämpfungskammer, an welcher die Dichtlippe der Überströmmanschette 38 anliegt, das Rückschlagventil 28 bildet. Die Überströmmanschette 38 ist durch die Stützscheibe 39, welche sich an einer radialen Erweiterung des Ventilträgers 36 abstützt, axial gesichert. Die Dämpfungskammer 24 wird im wesentlichen durch das Verschlußteil 40 begrenzt, welches in den Zylinderblock 30 einschraubbar ist und durch welches das Ventilgehäuse 33 befestigt ist. Eine axiale Begrenzungswand der Dämpfungskammer 24 wird durch das elastomere Formteil 41 gebildet, das durch den Deckel 42 gegen eine Anlagefläche des Verschlußteils 40 gehalten ist. Der Deckel 42 weist eine Ausnehmung auf, durch welche der Hohlraum 43 auf der der Dämpfungskammer gegenüberliegenden Seite des elastomeren Formteils 41 gebildet wird.

Bei starken Druckspitzen kann das elastomere Formteil 41 entsprechend seines Formänderungsvermögens und seiner Steifigkeit druckabhängig in den Hohlraum 43 ausweichen und somit die Druckpulsationen glätten. Da die Druckpulsationen auf hohem Druckniveau stattfinden, besitzt das Formteil 41 eine relativ geringe Kompressibilität, so daß die Energieaufnahme im wesentlichen durch elastische Verformung stattfindet. Eine zusätzliche Dämpfung wird durch die Strömungsrichtungsumkehr zwischen dem Pumpenraum und dem Druckanschluß 32 erreicht. Dabei ist es gemäß der Ausführung nach Fig. 1 von besonderem Vorteil, daß die Strömung in die Dämpfungskammer 24 durch den Kanal 37, also durch einen geschlossenen Querschnitt, erfolgt, während das Abströmen aus der Dämpfungskammer 24 über einen Ringspalt erfolgt.

Fig. 3 zeigt zeigt eine Ausführungsform, bei welcher sowohl das Druckventil 20 als auch das Rückschlagventil 28 als federbelastetes Rückschlagventil mit kugelförmigen Ventilschließglied innerhalb eines Ventilgehäuses 33 ausgebildet ist. Das dem Pumpenraum zugeordnete Druckventil 20 ist über den Kanal 50 mit der Dämpfungskammer 24 verbunden; von dort aus gelangt das Druckmittel über das Rückschlagventil 28, den Kanal 51, den Ringraum 52 und die Drosselstelle 31 zum nicht dargestellten Druckanschluß.

Das Ventilgehäuse 33 ist mit dem Verschlußteil 40 verstemmt, welches dann komplett vormontiert in den Zylinderblock geschraubt wird. Das elastomere Formteil 41 wird durch einen mit dem Verschlußteil 40 verstemmten Deckel gehalten und weist Ausnehmungen zur elastischen Verformung auf. Zwischen dem elastomeren Formteil 41 und dem Deckel ist ein Federelement 54 angeordnet, welches als Platte ausgeführt ist. Durch die elastische Beaufschlagung des Formteils 41 läßt sich eine optimale Anpassung der Dämpfungscharakteristik, insbesondere eine lineare Dämpfung erreichen. Auch eine Anpassung der Dämpfungseinrichtung an das jeweilige Druckniveau der Pumpe läßt sich hierdurch bewirken.

Bei entsprechender Abstimmung zwischen dem elastomeren Formteil 41 und der Feder 54 ist es möglich, daß bei relativ niedrigen Pumpendrücken die Pulsationsdämpfung durch ein elastisches Verformungen des Formteils 41, also Ausweichen in die Hohlräume, bewirkt wird, während bei hohen Pumpendrücken und nach annähernd vollständigem Ausnutzen des Formänderungsvermögens des Formteils 41 die Dämpfungsenergie durch das Federelement 54 aufgenommen wird.

### Bezugszeichenliste:

- 1: Bremsdruckgeber
- 2: Hauptbremszylinder
- 3: Unterdruckverstärker
- 4: Pedal
- 5: Druckstangenkolben
- 6: Zentralventil
- 7: Arbeitskammer
- 8: Bremsleitung
- 9: Schwimmkolben
- 10: Zentralventil
- 11: Arbeitskammer
- 12: Bremsleitung
- 13: Vorratsbehälter
- 14: Entlastungsleitung
- 15: Vorkammer
- 16: Pumpe
- 17: Exzenter
- 18: Kolben
- 19: Saugventil
- 20: Druckventil
- 21: Saugleitung
- 22: Druckleitung
- 23: Dämpfungseinrichtung
- 24: Dämpfungskammer
- 25: Kolben
- 26: Feder
- 27: Blende
- 28: Rückschlagventil
- 29: Pumpenraum
- 30: Zylinderblock
- 31: Drosselstelle
- 32: Druckanschluß
- 33: Ventilgehäuse
- 34: Ventilschließglied
- 35: Ventilsitz
- 36: Ventilträger
- 37: Kanal
- 38: Überströmmanschette
- 39: Stützscheibe
- 40: Verschlußteil
- 41: elastomeres Formteil
- 42: Deckel
- 43: Hohlraum
- 50: Kanal
- 51: Kanal
- 52: Ringraum
- 53: Ausnehmung
- 54: Federelement

## Patentansprüche

1. Blockiergeschützte, hydraulische Bremsanlage mit einem Hauptbremszylinder (2) und mindestens einer Radbremse, die mit dem Hauptzylinder (2) über eine Bremsleitung (12) verbunden ist, mit einer Pumpe (16), die als Verdrängerpumpe mit einem zwischen einem Pumpenraum (29) und einer Dämpfungseinrichtung (23) angeordneten Druckventil (20) ausgeführt ist, welches zum Pumpenraum (29) hin sperrt, mit Modulationsventilen (EV1, EV2; AV1 AV2) zum schlupfabhängigen Steuern des Druckes in der Radbremse, wobei zum Druckabsenken in der Radbremse Druckmittel entnommen und zum Druckaufbauen Druckmittel zugeführt wird, mit einer zur Dämpfungseinrichtung (23) in Reihe angeordneten Blende (27), mit einer den Hauptzylinder (2) mit der Pumpe (16) verbindenden Druckleitung (22), die ein Rückschlagventil (28) aufweist, das zur Pumpe (16) hin sperrt und das zwischen der Dämpfungseinrichtung (23) und dem Hauptzylinder (2) angeordnet ist, dadurch **gekennzeichnet**, daß das Rückschlagventil (28) durch eine Überströmmanschette (38) gebildet ist, die einen Ventilträger (36) radial umgibt, der an einem das Druckventil (20) und dessen Ventilsitz (35) aufnehmenden Ventilgehäuse (33) befestigt ist, wobei der Ventilträger (36) einen axial verlaufenden Kanal (37) aufweist, welcher das Druckventil (20) hydraulisch mit der Dämpfungskammer (24) verbindet sowie eine Strömungsumkehr zwischen dem Pumpenraum (29) und dem Druckauslaß (32) zu den Radbremsen und zum Hauptzylinder (2) vorsieht, und daß die Dichtlippe der Überströmmanschette (38) an einer Begrenzungswand einer Dämpfungskammer (24) der Dämpfungseinrichtung (23) anliegt.

2. Bremsanlage nach Anspruch 1, dadurch **gekennzeichnet**, daß das Rückschlagventil (28) in der Dämpfungseinrichtung (23) integriert vorgesehen ist.

3. Bremsanlage nach Anspruch 1 oder 2, dadurch **gekennzeichnet**, daß eine Drosselstelle (31) in der Dämpfungseinrichtung integriert ist.

4. Bremsanlage nach einem der vorhergehenden Ansprüche, dadurch **gekennzeichnet**, daß die Drosselstelle (31) als Strömungsquerschnitt zwischen einer Begrenzungswand der Dämpfungskammer (24) und dem Ventilgehäuse (33) ausgeführt ist.

5. Bremsanlage nach einem der vorhergehenden Ansprüche, dadurch **gekennzeichnet**, daß die Dämpfungskammer (24) zumindest teilweise von einem elastomeren Formteil (41) begrenzt ist, dessen der Dämpfungskammer (24) abgewandten Seite mindestens einen Hohlraum (43, 53) begrenzt.

6. Bremsanlage nach Anspruch 5, dadurch **gekennzeichnet**, daß der Hohlraum durch eine oder mehrere Ausnehmungen (53) im elastomeren Formteil gebildet ist.

7. Bremsanlage nach Anspruch 5, dadurch **gekennzeichnet**, daß der Hohlraum durch eine oder mehrere Ausnehmungen in der Begrenzungswand der Dämpfungseinrichtung ausgebildet ist.

8. Bremsanlage nach einem der vorhergehenden Ansprüche, dadurch **gekennzeichnet**, daß die Dämpfungseinrichtung im Gehäuse (30) der Pumpe integriert ist.

9. Bremsanlage nach einem der vorhergehenden Ansprüche, dadurch **gekennzeichnet**, daß das elastomere Formteil (41) den Hohlraum (43,53) gegenüber der Dämpfungskammer (24) abdichtet.

10. Bremsanlage nach einem der vorhergehenden Ansprüche, dadurch **gekennzeichnet**, daß der Hohlraum (43, 53) an den Atmosphärendruck angeschlossen ist.

11. Bremsanlage nach einem der vorhergehenden Ansprüche, dadurch **gekennzeichnet**, daß das elastomere Formteil (41) durch ein Federelement (54) beaufschlagbar ist.

12. Blockiergeschützte, hydraulische Bremsanlage mit einem Hauptbremszylinder (2) und mindestens einer Radbremse, die mit dem Hauptzylinder (2) über eine Bremsleitung (12) verbunden ist, mit einer Pumpe (16), die als Verdrängerpumpe mit einem zwischen einem Pumpenraum (29) und einer Dämpfungseinrichtung (23) angeordneten Druckventil (20) ausgeführt ist, welches zum Pumpenraum (29) hin sperrt, mit Modulationsventilen (EV1, EV2; AV1 AV2) zum schlupfabhängigen Steuern des Druckes in der Radbremse, wobei zum Druckabsenken in der Radbremse Druckmittel entnommen und zum Druckaufbauen Druckmittel zugeführt wird, mit einer zur Dämpfungseinrichtung (23) in Reihe angeordneten Blende, mit einer den Hauptzylinder (2) mit der Pumpe (16) verbindenden Druckleitung (22), die ein Rückschlagventil (28) aufweist, das zur Pumpe (16) hin sperrt und das zwischen der Dämpfungseinrichtung (23) und dem Hauptzylinder (2) angeordnet ist, dadurch **gekennzeichnet**, daß das Rückschlagventil (28) und das Druckventil (20) als federbelastete Rückschlagventile mit kugelförmigen Ventilschließgliedern innerhalb eines aus einem Verschlußteil (40) und elastomeren Formteil (41) im Zylinderblock (30) gebildeten Ventilgehäuses (33) angeordnet sind, und daß das Druckventil (20) über einen Kanal (50) im Ventilgehäuse (33) mit der Dämpfungskammer (24) der Dämpfungseinrichtung verbunden ist, die über das Rückschlagventil (28), über einen Kanal (51), über einen Ringraum (52) und eine Drosselstelle (31) mit dem Druckanschluß der zwischen dem Hauptzylinder (2) und den Radbremsen befindlichen Bremsleitungen eine hydraulische Verbindung aufweist.

## Claims

1. An anti-locking hydraulic brake system comprising a master brake cylinder (2) and at least one wheel brake in communication with the master cylinder (2) through a brake conduit (12), further comprising a pump (16) which is provided as a positive-displacement pump with a pressure valve (20) arranged between a pump chamber (29) and a damping means (23) and closing towards the pump chamber (29), comprising modulation valves (EV1, EV2; AV1, AV2) for the slip-responsive control of the pressure in the wheel brake, with pressure fluid being discharged from the wheel brakes for the pressure decrease, and with pressure fluid being supplied for the pressure increase, a diaphragm (27) arranged in series with the damping means (23), a pressure conduit (22) connecting the master cylinder (2) with the pump (16) and containing a check valve (28) which shuts off towards the pump (16) and which is arranged between the damping means (23) and the master cylinder (2),
**characterized** in that the check valve (28) is formed by an overflow collar (38), which radially encompasses a valve support (36) that is secured to a valve housing (33) accommodating the pressure valve (20) and its valve seat (35), the valve support (36) being provided with an axially extending passageway (37) which provides hydraulic communication between the pressure valve (20) and the damping chamber (24) and arranges for a reversed fluid flow between the pump chamber (29) and the pressure outlet (32) to the wheel brakes and to the master cylinder (2), and in that the sealing lip of the overflow collar (38) abuts on a confining wall of a damping chamber (24) of the damping means (23).

2. A brake system as claimed in claim 1,
**characterized** in that the check valve (28) is integrated in the damping means (23).

3. A brake system as claimed in claim 1 or claim 2,
**characterized** in that a throttle (31) is integrated in the damping means.

4. A brake system as claimed in any one of the preceding claims,
**characterized** in that the throttle (31) is designed as a flow cross-section between a confining wall of the damping chamber (24) and the valve housing (33).

5. A brake system as claimed in any one of the preceding claims,
**characterized** in that the damping chamber (24), at least in part, is confined by an elastomeric moulded part (41), the side of which facing away from the damping chamber (24) confines at least one cavity (43, 53).

6. A brake system as claimed in claim 5,
**characterized** in that the cavity is formed by one or more recesses (53) in the elastomeric shaped part.

7. A brake system as claimed in claim 5,
**characterized** in that the cavity is formed by one or more recesses in the confining wall of the damping means.

8. A brake system as claimed in any one of the preceding claims,
**characterized** in that the damping means is integrated in the housing (30) of the pump.

9. A brake system as claimed in any one of the preceding claims,
**characterized** in that the elastomeric moulded part (41) seals the cavity (43, 53) against the damping chamber (41).

10. A brake system as claimed in any one of the preceding claims,
**characterized** in that the cavity (43, 53) is in communication with atmospheric pressure.

11. A brake system as claimed in any one of the preceding claims,
**characterized** in that the elastomeric moulded part (41) can be acted upon by a spring element (54).

12. An anti-locking hydraulic brake system comprising a master brake cylinder (2) and at least one wheel brake in communication with the master cylinder (2) through a brake conduit (12), further comprising a pump (16) which is provided as a positive-displacement pump with a pressure valve (20) arranged between a pump chamber (29) and a damping means (23) and closing towards the pump chamber (29), comprising modulation valves (EV1, EV2; AV1, AV2) for the slip-responsive control of the pressure in the wheel brake, with pressure fluid being discharged from the wheel brakes for the pressure decrease, and with pressure fluid being supplied for the pressure increase, a diaphragm (27) arranged in series with the damping means (23), a pressure conduit (22) connecting the master cylinder (2) with the pump (16) and containing a check valve (28) which shuts off towards the pump (16) and which is arranged between the damping means (23) and the master cylinder (2),
**characterized** in that the check valve (28) and the pressure valve (20) are arranged as spring-loaded check valves with spherical valve closure members within a valve housing (33) which is formed by a closure member (40) and an elastomeric moulded part (41) in the cylindrical block (30), and in that the pressure valve (20), through a passageway (50) in the valve housing (33), is in communication with the damping chamber (24) of the damping means which establishes a hydraulic communication through the check valve (28), a passageway (51), an annular chamber (52) and a throttle (31) with the pressure port of the brake conduits disposed between the master cylinder (2) and the wheel brakes.

## Revendications

1. Système hydraulique de freinage antiblocage, comprenant un maître-cylindre de frein (2), au moins un frein de roue, qui est relié au maître-cylindre (2) par l'intermédiaire d'une conduite de frein (12), une pompe (16), qui est réalisée sous la forme d'une pompe de refoulement comportant une valve de pression (20) qui est disposée entre une chambre de pompe (29) et un dispositif d'amortissement (23) et qui bloque en direction de la chambre de pompe (29), des valves de modulation (EV1, EV2 ; AV1, AV2) servant à commander la pression dans le frein de roue en fonction du glissement, de l'agent de pression étant prélevé dans le frein de roue en vue de diminuer la pression et étant envoyé dans ce frein de roue en vue d'augmenter la pression, un étranglement (27), disposé en série vis-à-vis du dispositif d'amortissement (23), et une conduite de pression (22) qui relie le maître-cylindre (2) à la pompe (16) et comporte une valve antiretour (28) qui bloque en direction de la pompe (16) et est disposée entre le dispositif d'amortissement (23) et le maître-cylindre (2), caractérisé en ce que la valve antiretour (28) est formée d'une coupelle de trop-plein (38) qui entoure radialement un porte-valve (36) qui est fixé à un boîtier de valve (33) servant à loger la valve de pression (20) et le siège de valve (35) de cette dernière, le porte-valve (36) comportant un conduit (37) qui s'étend axialement et relie hydrauliquement la valve de pression (20) à la chambre d'amortissement (24) et qui permet une inversion d'écoulement entre la chambre de pompe (29) et la sortie de pression (32) menant aux freins de roue et au maître-cylindre (2), et en ce que la lèvre d'étanchéité de la coupelle de tropplein (38) prend appui sur une paroi de délimitation d'une chambre d'amortissement (24) du dispositif d'amortissement (23).

2. Système de freinage selon la revendication 1, caractérisé en ce que la valve antiretour (28) est disposée de façon à former une partie intégrante dans le dispositif d'amortissement (23).

3. Système de freinage selon l'une des revendications 1 et 2, caractérisé en ce qu'un emplacement d'étranglement (31) est disposé de façon à former une partie intégrante dans le dispositif d'amortissement.

4. Système de freinage selon l'une des revendications précédentes, caractérisé en ce que l'emplacement d'étranglement (31) est réalisé sous la forme d'une section transversale d'écoulement entre une paroi de délimitation de la chambre d'amortissement (24) et le boîtier de valve (33).

5. Système de freinage selon l'une des revendications précédentes, caractérisé en ce que la chambre d'amortissement (24) est délimitée au moins partiellement par une pièce moulée élastomère (41) dont la face tournée à l'opposé de la chambre d'amortissement (24) délimite au moins une cavité (43, 53).

6. Système de freinage selon la revendication 5, caractérisé en ce que la cavité est formée par un ou plusieurs évidements (53) ménagés dans la pièce moulée élastomère.

7. Système de freinage selon la revendication 5, caractérisé en ce que la cavité est formée par un ou plusieurs évidements ménagés dans la paroi de délimitation du dispositif d'amortissement.

8. Système de freinage selon l'une des revendications précédentes, caractérisé en ce que le dispositif d'amortissement est disposé en tant que partie intégrante dans le boîtier (30) de la pompe.

9. Système de freinage selon l'une des revendications précédentes, caractérisé en ce que la pièce moulée élastomère (41) assure l'étanchéité de la cavité (43, 53) vis-à-vis de la chambre d'amortissement (24).

10. Système de freinage selon l'une des revendications précédentes, caractérisé en ce que la cavité (43, 53) communique avec la pression atmosphérique.

11. Système de freinage selon l'une des revendications précédentes, caractérisé en ce que la pièce moulée élastomère (41) est agencée de façon à pouvoir être soumise à l'action d'un élément à action élastique (54).

12. Système hydraulique de freinage antiblocage, comprenant un maître-cylindre de frein (2), au moins un frein de roue, qui est relié au maître-cylindre (2) par l'intermédiaire d'une conduite de frein (12), une pompe (16), qui est réalisée sous la forme d'une pompe de refoulement comportant une valve de pression (20) qui est disposée entre une chambre de pompe (29) et un dispositif d'amortissement (23) et qui bloque en direction de la chambre de pompe (29), des valves de modulation (EV1, EV2 ; AV1, AV2) servant à commander la pression dans le frein de roue en fonction du glissement, de l'agent de pression étant prélevé dans le frein de roue en vue de diminuer la pression et étant envoyé dans ce frein de roue en vue d'augmenter la pression, un étranglement (27), disposé en série vis-à-vis du dispositif d'amortissement (23), et une conduite de pression (22), qui relie le maître-cylindre (2) à la pompe (16) et comporte une valve antiretour (28) qui bloque en direction de la pompe (16) et est disposée entre le dispositif d'amortissement (23) et le maître-cylindre (2), caractérisé en ce que la valve antiretour (28) et la valve de pression (20) sont disposées, sous la forme de valves antiretour soumises à une action élastique et comportant des obturateurs sphériques, à l'intérieur d'un boîtier de valve (33) formé, dans le bloc-cylindre (30), d'une pièce de fermeture (40) et d'une pièce moulée élastomère (41) et en ce que la valve de pression (20) est reliée, par l'intermédiaire d'un conduit (50) ménagé dans le boîtier de valve (33), à la chambre d'amortissement (24) du dispositif d'amortissement qui comporte une liaison hydraulique, par l'intermédiaire de la valve antiretour (28), d'un conduit (51), d'une chambre annulaire (52) et d'un emplacement d'étranglement (31), avec le raccord de pression des conduites de frein situées entre le maître-cylindre (2) et les freins de roue.
